# EUROPEAN PATENT SPECIFICATION

(11) **EP 3 084 939 B1**
(45) Date of publication and mention of the grant of the patent: **12.07.2023**
(21) Application number: 14830712.7
(22) Date of filing: 18.12.2014
(51) Int. Cl.: H02K 29/03, H02K 1/276

(54) **ROTOR SEGMENT AND ELECTRIC MACHINE ROTOR AND ELECTRIC MACHINE COMPRISING SUCH A ROTOR SEGMENT**
ROTORSEGMENT UND ROTOR EINER ELEKTRISCHEN MASCHINE SOWIE ELEKTRISCHE MASCHINE MIT EINEM DERARTIGEN ROTORSEGMENT
SEGMENT DE ROTOR ET ROTOR DE MACHINE ÉLECTRIQUE AINSI QUE MACHINE ÉLECTRIQUE COMPRENANT UN TEL SEGMENT DE ROTOR

(30) Priority: 18.12.2013 IT MI20132126
(43) Date of publication of application: 26.10.2016
(73) Proprietor: WINDFIN B.V., 2451 VW Leimuiden (NL)
(72) Inventor: SCUOTTO, Mattia, I-39049 Vipiteno (IT)
(74) Representative: Eccetto, Mauro
(86) International application number: PCT/IB2014/067090
(87) International publication number: WO 2015/092744

(56) References cited:
- EP-A1- 2 498 376
- EP-B1- 2 498 376
- WO-A1-2013/177885
- CN-U- 201 742 192
- GB-A- 2 158 653
- US-B2- 6 768 238

## Description

### TECHNICAL FIELD

The present invention relates to a rotor segment of a rotor for an electric machine.

### BACKGROUND ART

EP 2 498 376 A1 discloses a wind turbine rotary electric machine having a tubular body and rotor segments housed on the tubular body.

WO 2013/177885 A1 discloses a rotor assembly structure comprising several permanent magnets.

GB 2 158 653 A discloses a rotor with permanent magnets for an electrical machine.

CN 201742192 U discloses a tangential magnetic steel rotor structure of a permanent magnet motor.

US 6 768 238 B2 discloses a rotor for permanent magnet synchronous with a reduction in the stray flux transmitted.

Generally, an electric machine comprises a stator and a rotor rotating with respect to the stator about an axis of rotation. The stator comprises a stator support structure and an active stator part supported by the stator support structure.

The rotor comprises a rotor support structure and an active rotor part subdivided into rotor segments uniformly distributed about the axis of rotation. Each rotor segment comprises magnetic guides and a plurality of magnetic modules. Each magnetic module or set of magnetic modules is arranged inside a magnetic guide. The magnetic guide and the associated magnetic modules are distributed along the rotor segment parallel to the axis of rotation. The rotor segment is mounted on the respective rotor support structure in a selectively releasable manner.

In rotating electric machines of the type indicated above, it is possible to observe, in use, mechanical oscillations intrinsically related to the design of the machine and caused by respective magnetic fields.

To overcome this drawback, in rotating electric machines it is known to arrange the rotor segment comprising the magnetic modules and the respective magnetic guides along an alignment axis that is not parallel to the axis of rotation and which forms an angle known as the "skew angle" with the generatrix of a hypothetical cylinder extending around the axis of rotation. The skew angle is chosen according to the frequency of mechanical oscillation that it is wished to attenuate or eliminate.

However, the assembly of the rotor segment on the rotor along an alignment axis not parallel to the axis of rotation of the rotor is expensive and requires lengthy assembly times, especially in large rotating electric machines. In addition, with this configuration, disassembling the rotor segment from the rotor support structure during maintenance entails lengthy times and relatively complex procedures.

### DISCLOSURE OF INVENTION

One object of the present invention is that of providing a rotor segment for an electric machine that limits the drawbacks of the known art.

According to the present invention, a rotor segment of a rotating electric machine is provided, the rotor segment extending along a given plane and comprising at least two magnetic guides, which are aligned along the given axis and are configured to house respective magnetic modules and to guide the magnetic flux generated by the magnetic modules to an air gap, wherein each magnetic guide comprises a first and a second face that face the air gap and extend on opposite sides of the magnetic module along a first and a second surface respectively; the first surface being greater than the second surface; and the first face of a magnetic guide being aligned with and adjacent to the second face of the other magnetic guide; each magnetic guide comprises a first lateral magnetic guide portion along which the first face extends; a second lateral magnetic guide portion along which the second face extends; and at least one magnetic module; wherein the first and second lateral magnetic guide portions face each other, define a seat for housing the at least one magnetic module and are positioned in contact with the at least one magnetic module along two respective contact faces; wherein the first and second lateral magnetic guide portions comprise a first and a second projection respectively; the first and second faces extending partly along the first and second projections respectively.

In this way, it is possible to produce a rotor segment with a non-uniform magnetic field along the given axis of the rotor segment. In practice, the magnetic field assumes a non-uniform distribution along the given axis and enables reducing oscillations and spatial harmonics. Furthermore, the design of the rotor segment does not impair the possibility of the rotor segment from sliding axially.

From the structural standpoint, it is particularly convenient to provide the first and second faces at the free ends of the first and second lateral magnetic guide portions respectively.

Preferably, the first and second lateral magnetic guide portions are separate and distinct from each other.

This configuration facilitates segment assembly.

In practice, each module is sandwiched between the first and second lateral magnetic guide portions, so as to direct the magnetic flux through the first and second lateral magnetic guide portions.

Essentially, the first and second lateral magnetic guide portions have flared ends of different size that enable defining the different extensions of the first and second faces.

Preferably, the first and second projections face each other.

In practice, the first and second projections project from the seat for housing the at least one magnetic module, the first projection projecting further than the second projection.

Preferably, the magnetic module has a plane of symmetry coincident with the plane, in which each magnetic guide is asymmetric with respect to the given plane, and the magnetic guides are identical.

According to a preferred embodiment of the present invention, the first and second projections are bounded by a first and a second connecting face, respectively, which connect the first and second faces to the first and second contact faces respectively; the first and second connecting faces preferably being flat.

This configuration enables guiding the magnetic flux and exploiting the first and second surfaces of the first and second faces.

A further object of the present invention is to provide a rotor that is able to mitigate the drawbacks of the known art.

According to the present invention, a rotor is provided for a rotating electric machine, wherein the rotor comprises a rotor support structure and a plurality of rotor segments, each produced according to any one of claims 1 to 7.

A further object of the present invention it to provide a rotating electric machine that is able to mitigate the drawbacks of the known art.

In accordance with the present invention, a rotating electric machine comprising a rotor according to claim 8 is provided.

### BRIEF DECRIPTION OF THE DRAWINGS

Other characteristics and advantages of the present invention will become apparent from the description that follows of a non-limitative embodiment, with reference to the accompanying figures, in which:
- Figure 1 is an elevation view, with parts in section and parts removed for clarity, of an electric machine produced according to the present invention;
- Figure 2 is a perspective view, with parts removed for clarity, of a rotor segment produced according to the present invention;
- Figure 3 is a cross-section view, with parts removed for clarity, along section plane III-III of the rotor segment in Figure 2; and
- Figure 4 is a cross-section view, with parts removed for clarity, along section plane IV-IV of the rotor segment in Figure 2;
- Figure 5 is a perspective view of a rotor segment produced according to an alternative embodiment of the present invention.

### BEST MODE FOR CARRYING OUT THE INVENTION

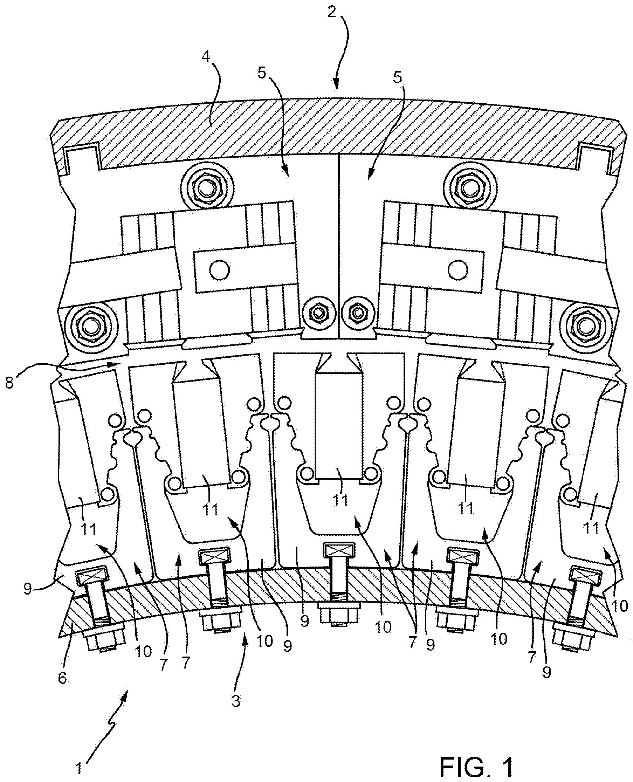

With reference to Figure 1, reference numeral 1 indicates a rotating electric machine. In the case shown, the rotating electric machine 1 is used as an electric generator, preferably in a wind plant for generating electricity; or as an electric motor, preferably in a cable transport system. In general, the rotating electric machine 1 forming the subject of the present invention is suitable for applications that contemplate direct drive.

The rotating electric machine 1 comprises a stator 2 and a rotor 3 rotating with respect to the stator 2 about an axis of rotation A1.

The stator 2 comprises a stator support structure 4, a tubular wall in this case, and an active stator part comprising a plurality of stator segments 5 that extend parallel to the axis of rotation A1 and are uniformly distributed around the axis of rotation A1.

The rotor 3 comprises a rotor support structure 6, a tubular wall in this case, and an active rotor part comprising a plurality of rotor segments 7 that extend parallel to the axis of rotation A1 and are uniformly distributed around the axis of rotation A1.

The active stator part and the active rotor part are separated by an air gap 8.

In the case shown, the rotating electric machine 1 is a permanent magnet synchronous electric machine.

The stator segments 5 and the rotor segments 7 are connected to the respective stator structure 4 and rotor structure 6 in a manner such that they can slide in a direction parallel to the axis of rotation A1 and be selectively constrained in a given position.

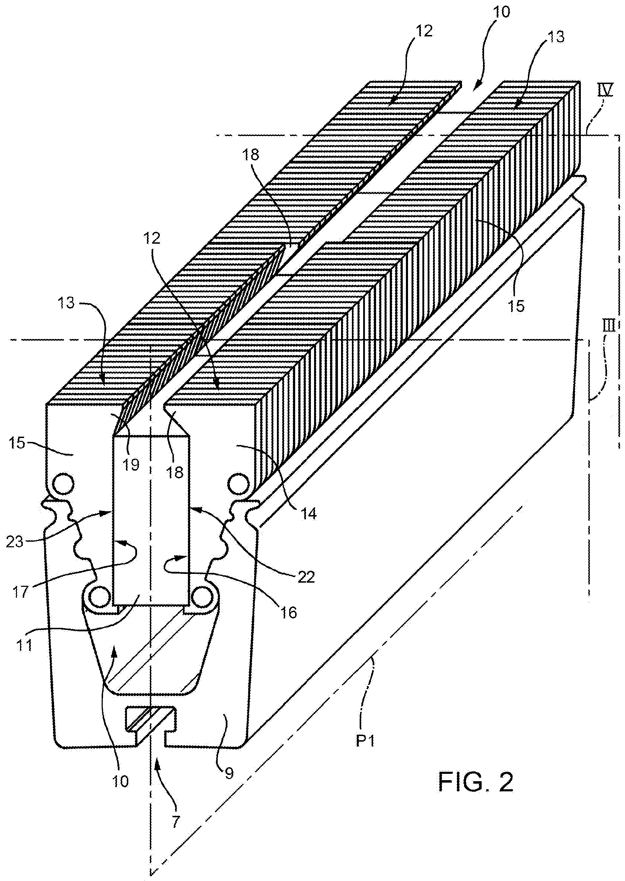

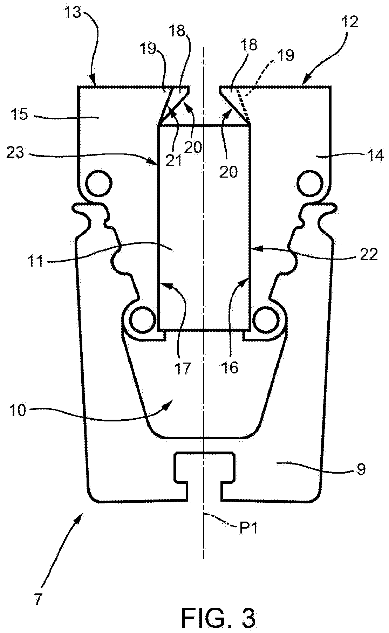

With reference to Figures 2 and 3, each rotor segment 7 extends along a plane P1 comprising the axis of rotation A1 and comprises a support element 9; a plurality of magnetic guides 10; and a plurality of magnetic modules 11. The plane P1 is a mean plane of symmetry for the support element 9 and for the plurality of magnetic modules 11. In a preferred and non-limitative version of the present invention, the rotor segment comprises eleven magnetic guides 10 (of which only four are shown in Figure 2) and eleven magnetic modules (of which only four are shown in Figure 2).

The support element 9 has a pocket-like shape defining a seat for housing magnetic guides 10 and magnetic modules 11 and is designed to be connected to the rotor support structure 6.

Each magnetic guide 10 defines a seat for housing at least one magnetic module 11 and comprises two faces 12 and 13 facing the air gap 8, or at least configured for being set to face the air gap 8 (Figure 1), which extend on opposite sides of the magnetic module 11 along a first and a second surface, respectively, where the first surface is larger than the second surface. In practice, face 12 is bigger than face 13. Furthermore, the faces 12 and 13 are coplanar. In the case shown in Figure 2 there are two magnetic guides 10 that are arranged such that faces 12 of one magnetic guide 10 are aligned with and adjacent to faces 13 of the other magnetic guide 10.

In fact, each magnetic guide 10 is asymmetric with respect to plane P1. However, the two magnetic guides 10 shown in Figure 2 are geometrically identical to each other.

Each magnetic guide 10 is made of sheet-metal plates stacked along planes parallel to plane P1. The prismatic shape of the magnetic guide 10 is provided by the profile of the sheet-metal plates.

In the case shown, each magnetic guide 10 comprises a lateral magnetic guide portion 14 along which face 12 extends and a second lateral magnetic guide portion 15 along which face 13 extends. In this specific case, the lateral magnetic guide portions 14 and 15 are set apart from each other and pressed against the magnetic module 11 by the support element 9.

The lateral magnetic guide portions 14 and 15 face each other, define a seat for housing at least one magnetic module 11 and are positioned in contact with the magnetic module 11 along two respective contact faces 16 and 17.

The lateral magnetic guide portions 14 and 15 extend beyond the seat for housing the magnetic module 11 and have respective projections 18 and 19, along which faces 12 and 13 respectively extend.

The projections 18 and 19 project over the seat for housing the magnetic module 11 to a different extent: projection 18 projects more with respect to projection 19.

The projections 18 and 19 are bounded by respective connecting faces 20 and 21 that connect faces 12 and 13 to contact faces 16 and 17. Preferably, the connecting faces 20 and 21 are flat and give the projections 18 and 19 a triangular cross-section. Each magnetic module 11 comprises a prismatic block made of a magnetized material having two opposite sides 22 and 23 with different polarities: side 22 has a north polarity while side 23 has a south polarity.

Each rotor segment 7 comprises at least two magnetic modules 11 aligned along plane P1 and equioriented. In other words, the polarities of the magnetic modules 11 aligned in a rotor segment 7 are concordant.

With reference to Figure 3, magnetic module 11 has side 22 in direct contact with contact face 16 and side 23 in direct contact with contact face 17.

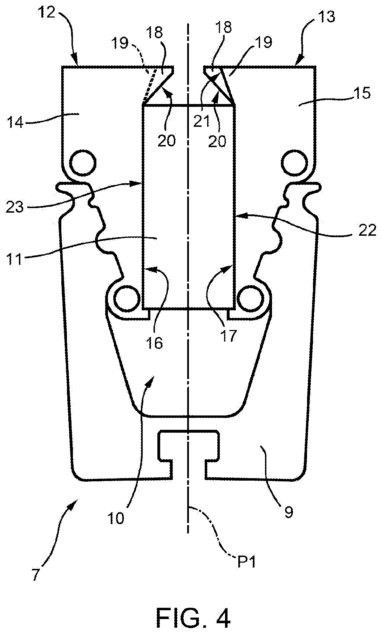

With reference to Figure 4, magnetic module 11 has side 22 in direct contact with contact face 17 and side 23 in direct contact with contact face 16.

In consequence, the combination of the asymmetric magnetic guides 10 with the magnetic modules 11 can define two different types of magnetic sets that can be alternated along the support element 9 of the rotor segment 7. In particular, in the no-limitative embodiment of the present invention shown in Figure 3, the magnetic guides 10 are grouped in sets of two magnetic guides 10. The sets of magnetic guides 10 are arranged so as to have mutually opposite orientation, while the orientation of the polarities of the magnetic modules housed inside sets of magnetic guides 10, is always concordant between the sets. Furthermore, the two magnetic guides in each set are identical and have the same orientation.

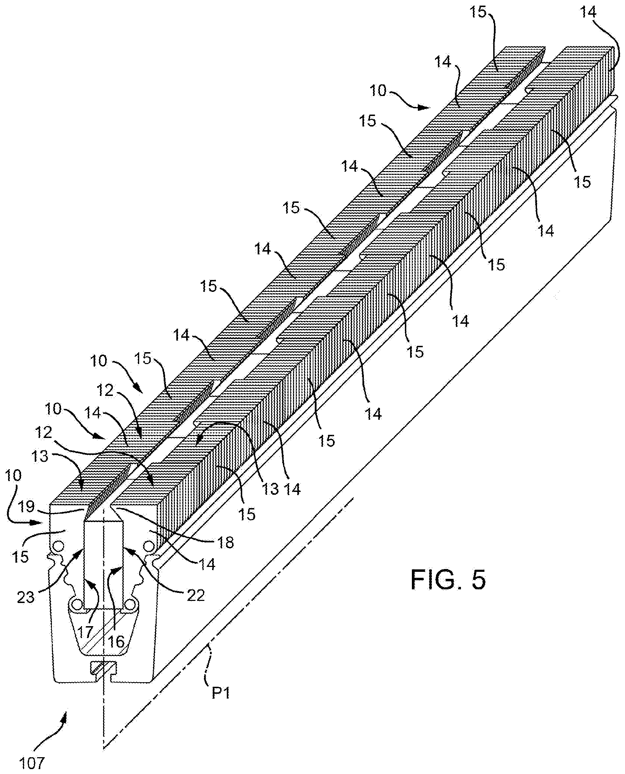

In an alternative embodiment shown in Figure 5, the rotor segment 107 comprises eleven magnetic guides 10 aligned along plane P1, comprising the axis of rotation A1. Each magnetic guide 10 is arranged to have an orientation opposite to the adjacent magnetic guide 10, while the orientation of the polarities of the magnetic modules 11 housed inside each magnetic guide 10 is always concordant between the magnetic guides 10. In other words, along the rotor segment 107, the first lateral magnetic guide portion 14 of one of the magnetic guides 10 is always adjacent to, and preferably in contact with, a second lateral magnetic guide portion 15 of the adjacent magnetic guide 10.

Moreover, it is evident that the present invention also covers embodiments not described in the detailed description and equivalent embodiments that fall within the scope of the appended claims.

## Claims

1. A rotor segment of a rotating electric machine, the rotor segment (7) extending along a given plane (P1) and comprising at least two magnetic guides (10), which are aligned along the given plane (P1) and designed to house respective magnetic modules (11) and to guide the magnetic flux generated by the magnetic modules (11) to an air gap (8); wherein each magnetic guide (10) comprises a first and a second face (12, 13) facing the air gap (8) and extending on opposite sides of the magnetic module (11) along a first and a second surface respectively; the first surface being greater than the second surface; and the first face (12) of one magnetic guide (10) being aligned with and adjacent to the second face (13) of the other magnetic guide (10); wherein each magnetic guide (10) comprises a first lateral magnetic guide portion (14) along which the first face (12) extends; a second lateral magnetic guide portion (15) along which the second face (13) extends; and at least one magnetic module (11); wherein the first and second lateral magnetic guide portions (14, 15) face each other, define a seat for housing the at least one magnetic module (11) and are positioned in contact with the at least one magnetic module (11) along two respective contact faces (16, 17); wherein the first and second lateral magnetic guide portions (14, 15) comprise a first and a second projection (18, 19) respectively; the first and second faces (12, 13) extending partly along the first and second projections (18, 19) respectively.

2. A rotor segment as claimed in claim 2, wherein the first and second lateral magnetic guide portions (14, 15) are separate and distinct from each other.

3. A rotor segment as claimed in claim 5, wherein the first and second projections (18, 19) project from the seat for housing the at least one magnetic module (11); the first projection (18) projecting further than the second projection (19) .

4. A rotor segment as claimed in claim 1 or 3, wherein the first and second projections (18, 19) are bounded by a first and a second connecting face (20, 21), which connect the first and second faces (12, 13) to the first and second contact faces (16, 17) respectively; the first and second connecting faces (20, 21) preferably being flat.

5. A rotor segment as claimed in one of claims 1, 3 and 4, wherein the magnetic module has a plane of symmetry coincident with said given plane (P1); and wherein each magnetic guide (10) is asymmetric with respect to the given plane (P1) and the magnetic guides (10) are identical.

6. A rotor segment as claimed in one of claims 1, 3, 4 and 5 and comprising at least one magnetic module (11) for each magnetic guide (10); the magnetic modules (11) being aligned along the given plane (P1) and equioriented.

7. A rotor segment according to claim 6, wherein the polarities of the magnetic modules (11) aligned in the rotor segment (7) are concordant.

8. A rotor for a rotating electric machine, the rotor (3) comprising a rotor support structure (6); and a plurality of rotor segments (7), each produced according to any one of the preceding claims.

9. A rotating electric machine comprising a rotor (3) according to claim 8

## Patentansprüche

1. Rotorsegment einer rotierenden elektrischen Maschine, wobei sich das Rotorsegment (7) entlang einer vorgegebenen Ebene (P1) erstreckt und mindestens zwei Magnetführungen (10) aufweist, die entlang der vorgegebenen Ebene (P1) fluchten und ausgestaltet sind, jeweilige Magnetmodule (11) aufzunehmen und den von den Magnetmodulen (11) erzeugten magnetischen Fluss zu einem Luftspalt (8) zu führen; wobei jede Magnetführung (10) eine erste und eine zweite Fläche (12, 13) aufweist, die dem Luftspalt (8) zugewandt sind und sich auf gegenüberliegenden Seiten des Magnetmoduls (11) entlang einer ersten bzw. einer zweiten Oberfläche erstrecken; wobei die erste Oberfläche größer ist als die zweite Oberfläche; und wobei die erste Fläche (12) einer Magnetführung (10) mit der zweiten Fläche (13) der anderen Magnetführung (10) fluchtet und zu dieser benachbart ist; wobei jede Magnetführung (10) einen ersten lateralen Magnetführungsabschnitt (14), entlang dessen sich die erste Fläche (12) erstreckt; sowie einen zweiten lateralen Magnetführungsabschnitt (15), entlang dessen sich die zweite Fläche (13) erstreckt; und mindestens ein Magnetmodul (11) aufweist; wobei der erste und der zweite laterale Magnetführungsabschnitt (14, 15) einander zugewandt sind, einen Sitz zum Aufnehmen des mindestens einen Magnetmoduls (11) definieren und entlang zweier jeweiliger Kontaktflächen (16, 17) in Kontakt mit dem mindestens einen Magnetmodul (11) positioniert sind; wobei der erste und der zweite laterale Magnetführungsabschnitt (14, 15) einen ersten bzw. einen zweiten Vorsprung (18, 19) aufweisen, wobei sich die erste und die zweite Fläche (12, 13) teilweise entlang des ersten bzw. des zweiten Vorsprungs (18, 19) erstrecken.

2. Rotorsegment nach Anspruch 2, wobei der erste und der zweite laterale Magnetführungsabschnitt (14, 15) voneinander getrennt und unterschiedlich sind.

3. Rotorsegment nach Anspruch 5, wobei der erste und der zweite Vorsprung (18, 19) von dem Sitz zum Aufnehmen des mindestens einen Magnetmoduls (11) vorspringen; wobei der erste Vorsprung (18) weiter vorspringt als der zweite Vorsprung (19).

4. Rotorsegment nach Anspruch 1 oder 3, wobei der erste und der zweite Vorsprung (18, 19) durch eine erste und eine zweite Verbindungsfläche (20, 21), welche die erste und die zweite Fläche (12, 13) mit der ersten bzw. der zweiten Kontaktfläche (16, 17) verbinden, eingegrenzt sind; wobei die erste und die zweite Verbindungsfläche (20, 21) vorzugsweise flach sind.

5. Rotorsegment nach einem der Ansprüche 1, 3 und 4, wobei das Magnetmodul eine Symmetrieebene aufweist, die mit der vorgegebenen Ebene (P1) zusammenfällt; und wobei jede Magnetführung (10) in Bezug auf die vorgegebene Ebene (P1) asymmetrisch ist und die Magnetführungen (10) identisch sind.

6. Rotorsegment nach einem der Ansprüche 1, 3, 4 und 5, aufweisend mindestens ein Magnetmodul (11) für jede Magnetführung (10); wobei die Magnetmodule (11) entlang der vorgegebenen Ebene (P1) fluchten und gleichausgerichtet sind.

7. Rotorsegment nach Anspruch 6, wobei die Polaritäten der in dem Rotorsegment (7) fluchtenden Magnetmodule (11) konkordant sind.

8. Rotor für eine rotierende elektrische Maschine, wobei der Rotor (3) eine Rotorstützstruktur (6); und eine Vielzahl von Rotorsegmenten (7) aufweist, die jeweils gemäß einem der vorstehenden Ansprüche produziert werden.

9. Rotierende elektrische Maschine, aufweisend einen Rotor (3) nach Anspruch 8.

## Revendications

1. Segment de rotor d'une machine électrique rotative, le segment de rotor (7) s'étendant le long d'un plan donné (P1) et comprenant au moins deux guides magnétiques (10) qui sont alignés le long du plan donné (P1) et conçus pour loger des modules magnétiques (11) respectifs et pour guider le flux magnétique généré par les modules magnétiques (11) vers un entrefer (8) ; dans lequel chaque guide magnétique (10) comprend une première et une deuxième face (12, 13) faisant face à l'entrefer (8) et s'étendant sur des côtés opposés du module magnétique (11) le long d'une première et d'une deuxième surface respectivement ; la première surface étant plus grande que la deuxième surface ; et la première face (12) d'un guide magnétique (10) étant alignée avec la deuxième face (13) de l'autre guide magnétique (10) et adjacente à celle-ci ; dans lequel chaque guide magnétique (10) comprend une première partie latérale de guide magnétique (14) le long de laquelle s'étend la première face (12) ; une deuxième partie latérale de guide magnétique (15) le long de laquelle s'étend la deuxième face (13) ; et au moins un module magnétique (11) ; dans lequel les première et deuxième parties latérales de guide magnétique (14, 15) se font face, définissent un siège pour loger l'au moins un module magnétique (11) et sont positionnées en contact avec l'au moins un module magnétique (11) le long de deux faces de contact (16, 17) respectives ; dans lequel les première et deuxième parties latérales de guide magnétique (14, 15) comprennent une première et une deuxième saillie (18, 19) respectivement ; les première et deuxième faces (12, 13) s'étendant partiellement le long des première et deuxième saillies (18, 19) respectivement.

2. Segment de rotor selon la revendication 2, dans lequel les première et deuxième parties latérales de guide magnétique (14, 15) sont séparées et distinctes l'une de l'autre.

3. Segment de rotor selon la revendication 5, dans lequel les première et deuxième saillies (18, 19) font saillie à partir du siège pour loger l'au moins un module magnétique (11) ; la première saillie (18) faisant saillie plus loin que la deuxième saillie (19).

4. Segment de rotor selon la revendication 1 ou 3, dans lequel les première et deuxième saillies (18, 19) sont délimitées par une première et une deuxième face de connexion (20, 21) qui connectent les première et deuxième faces (12, 13) aux première et deuxième faces de contact (16, 17) respectivement ; les première et deuxième faces de connexion (20, 21) étant de préférence planes.

5. Segment de rotor selon l'une des revendications 1, 3 et 4, dans lequel le module magnétique a un plan de symétrie coïncidant avec ledit plan donné (P1) ; et dans lequel chaque guide magnétique (10) est asymétrique par rapport au plan donné (P1), et les guides magnétiques (10) sont identiques.

6. Segment de rotor selon l'une des revendications 1, 3, 4 et 5 et comprenant au moins un module magnétique (11) pour chaque guide magnétique (10) ; les modules magnétiques (11) étant alignés le long du plan donné (P1) et équidistants.

7. Segment de rotor selon la revendication 6, dans lequel les polarités des modules magnétiques (11) alignés dans le segment de rotor (7) sont concordantes.

8. Rotor pour une machine électrique rotative, le rotor (3) comprenant une structure de support de rotor (6) ; et une pluralité de segments de rotor (7), chacun produit selon l'une quelconque des revendications précédentes.

9. Machine électrique rotative comprenant un rotor (3) selon la revendication 8.
